# EUROPEAN PATENT SPECIFICATION

(11) **EP 3 882 738 B1**
(45) Date of publication and mention of the grant of the patent: **12.04.2023**
(21) Application number: 20163951.5
(22) Date of filing: 18.03.2020
(51) Int. Cl.: G05D 23/19, F24F 11/30, G05B 15/00

(54) **METHOD AND SYSTEM FOR TEMPORARY SUPPLY OF ENERGY TO BUILDINGS**
VERFAHREN UND SYSTEM ZUR ZEITWEILIGEN ENERGIEVERSORGUNG VON GEBÄUDEN
PROCÉDÉ ET SYSTÈME DE FOURNITURE TEMPORAIRE D'ÉNERGIE À DES BÂTIMENTS

(43) Date of publication of application: 22.09.2021
(73) Proprietor: EL-Björn AB, 334-21 Anderstorp (SE)
(72) Inventor: STRÅLMAN, Thomas, 753 17 Uppsala (SE)
(74) Representative: Bergenstråhle & Partners AB

(56) References cited:
- GB-A- 2 462 143
- US-A1- 2014 229 018
- US-A1- 2018 181 150
- US-A1- 2019 052 683

## Description

### Technical field

The present invention relates generally to methods and systems for temporary supply of energy to buildings. Such a system comprises a plurality of mobile inner-climate influencing appliances to be distributed in a building, each inner-climate influencing appliance being arranged for distributing energy in at least a part of the building in which the inner-climate influencing appliance is to be arranged. The system further comprises an energy centre for supplying energy in the shape of fluid e.g. hot water, or electricity to the plurality of inner-climate influencing appliances. Further, the inner-climate influencing appliances are in energy communication with the energy centre when the system is in use, so that energy distributed by the energy centre is received at the plurality of inner-climate influencing appliances.

### Background art

Sometimes a building needs temporary supply of energy, for example at a construction site, e.g. when a new building is under construction or when renovating an already existing building. Then a system for temporary supply of energy is installed in the building. Such a system comprises a plurality of mobile inner-climate influencing appliances that are positioned at different parts and rooms of the building depending on need. The inner-climate influencing appliances may be e.g. dehumidifiers, fan heaters, air cleaning devices etc. The purpose with the inner-climate influencing appliances is to keep a suitable inner climate for the building, for example a suitable temperature and a suitable humidity level.

In order to do that, the inner-climate influencing appliances distribute energy in the building in the shape of e.g. warm/hot air through the building. For this reason they need to be supplied with energy. Therefore, the system is provided with a mobile energy centre that is connected to an energy grid. The energy grid may be a district heating network. In this case the incoming energy may be hot water. Alternatively, the energy grid may be an electrical power grid. In this case the incoming energy is electricity.

The inner-climate influencing appliances are connected to the mobile energy centre so that energy coming into the energy centre from the energy grid can be distributed out to the individual inner-climate influencing appliances.

In such a system it is of importance to keep the climate at each room of the building at a suitable level during construction to avoid moisture problems such as mould or mildew. Further, it is of importance to keep the power consumption at the whole building down. Therefore, the system needs to be controlled.

Document US 2014/229018 A1 discloses remotely managed load switches incorporating thermostatic controllers for an energy management system with plug-in air conditioners and heaters.

### Summary of invention

It is an object of the invention to address at least some of the problems and issues outlined above. It is possible to achieve these objects and others by methods and systems defined in the attached independent claims.

According to one aspect, a system is provided as set out in claim 1.

By such a system, it is possible to remotely control the inner climate in a building which is under construction or renovation, in order to keep the inner climate on a suitable level for the materials in different rooms of the building, in terms of e.g. temperature and humidity. Also, the energy used at different parts of the building can be controlled energy efficiently in order to keep the total energy consumption of the system as low as possible. This is especially true as the inner-climate influencing appliances can be controlled individually, with individual distribution control instructions, depending on climate-related quantity values that are measured by the sensors. Further, as the climate-related quantity values are sent towards a common supervising functionality, the individual control instructions can be determined so that they take the overall climate situation in the building into consideration, as well as the total energy consumption. Consequently, by locally determining climate-related quantity values, such as temperature, and sending those locally determined values to a remotely placed supervising functionality, the supervising functionality can determine individual energy distribution control instructions for the individual inner-climate influencing appliances, taking the whole energy and climate situation of the building into consideration as well as the local situation at the appliance. Further, as the inner-climate influencing appliances each has a controller for controlling the distribution of energy and a wireless communication device, the controller of each appliance can receive those individually determined distribution control instructions and control the distribution of energy from the inner-climate influencing appliance according to the instructions.

The system works together with the supervising functionality that may be a part of the system, or alternatively the supervising functionality is separate from the system. For the latter, the system is prepared for communication with the supervising functionality and the supervising functionality is prepared for communication with the system.

According to an embodiment, the system further comprising a temporary wireless access node arranged for receiving the climate-related quantity values transmitted by the first wireless communication devices, for transmitting the climate-related quantity values to the supervising functionality, for receiving the distribution control instructions from the supervising functionality, and for wirelessly transmitting the distribution control instructions to the wireless communication device of the respective inner-climate influencing appliances. By erecting such a temporary wireless access node in the vicinity of the building to which energy is to be temporary supplied, a more fail-safe communication can be ensured compared to when the first wireless communication devices and the wireless communication devices of the inner-climate influencing appliances communicate directly with a public wireless communication network to which the supervising functionality is connected.

According to another aspect, a method for controlling temporary supply of energy to a building is provided as set out in claim 10.

Further possible features and benefits of this solution will become apparent from the detailed description below.

### Brief description of drawings

The solution will now be described in more detail by means of exemplary embodiments and with reference to the accompanying drawings, in which:
Fig. 1 is a schematic view of a system according to an embodiment of the invention installed in a building 10 shown in cross-section.
Fig. 2 is a flow chart of an embodiment of a method according to the invention.

### Description of embodiments

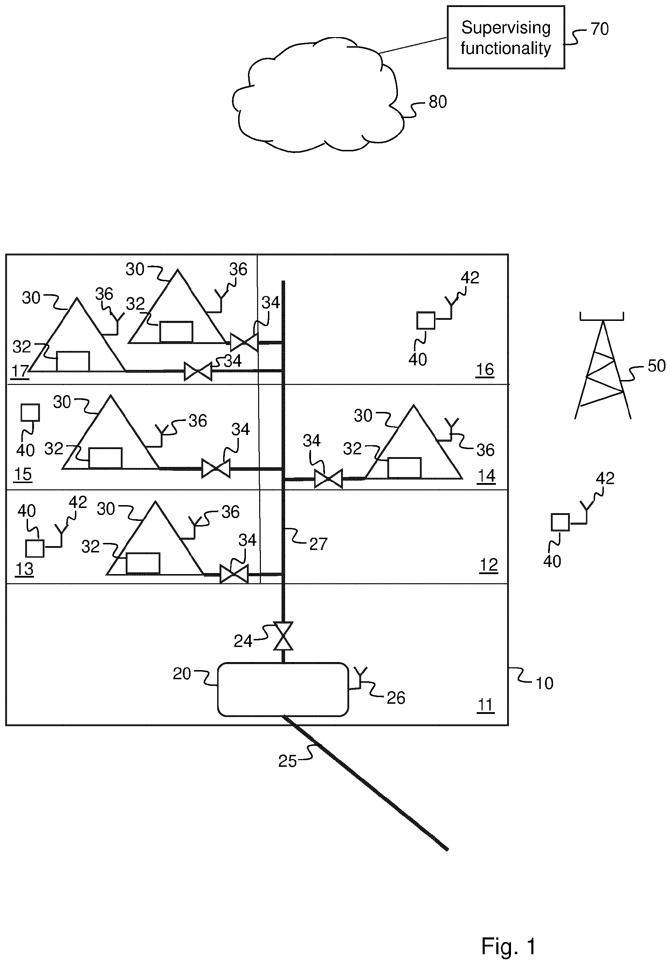

Fig. 1 shows an example of a building 10 in or at which a system for temporary supply of energy according to embodiments of the invention is arranged. The exemplary building 10 of fig. 1 comprises a cellar 11 and six rooms 12-17. The system comprises an energy centre 20 for supplying energy in the shape of fluid e.g. hot water, or electricity. 1 The energy centre 20, which is mobile, is in this example positioned in the cellar 11. However, the energy centre 20 may be positioned at any other floor or room of the building 10 but also outside the building 10. Further, as the energy centre 20 is mobile it may be moved between different positions, floors and rooms. The energy centre 20 may be connected to an energy grid via an incoming supply line 25 through which it receives incoming energy that is to be supplied. In case the energy grid is a district heating network, the incoming energy may be hot water, or alternatively hot air. Then the incoming supply line 25 may be realized as a supply tube. Alternatively, the energy grid is an electrical power grid. In this case the incoming energy is electricity and the incoming supply line 25 may be realized as an electrical supply cable. Still alternatively, the energy centre 20 is a local energy source in which the energy used in the system is produced. As examples, the local energy source may be a pellets boiler or an oil boiler. The system may comprise more than one energy centre 20.

The system further comprises a plurality of mobile inner-climate influencing appliances 30 that are distributed in the building 10. The inner-climate influencing appliances 30 are appliances that can influence or alter the inner climate in a building, such as dehumidifiers, fan heaters, fans used as a complement to the fan heaters in order to aid in distributing the heated air, air cleaning devices. That the inner-climate influencing appliances 30 are mobile means that they can be moved within the building 10, within a room of the building or to other rooms of the building. As seen in the example of fig. 1, there may be one or more appliances 30 in each room 11-17. For example, in room 17 there are two appliances 30. Also, there may of course be rooms in which there are no inner-climate influencing appliances (see room 12 and 16). The inner-climate influencing appliances 30 are in energy communication with the energy centre 20 when the system is in use. This signifies that they 30 are connected with the energy centre 20 e.g. via tubes or electrical cables 27 so that the energy, e.g. hot water or electricity, that the energy centre 20 supplies can be delivered to the inner-climate influencing appliances 30 from the energy centre 20. The energy centre 20 has a controller 24 for controlling supply of energy out from the energy centre 20 to the plurality of inner-climate influencing appliances 30. In case the energy is delivered through hot water, the controller 24 may control, or comprise, a valve. Further, the system may comprise distribution centrals (not shown) spread out in the building 10. The distribution centrals may be connected between the one or more energy centres 20 and the inner-climate influencing appliances 30, energy-distribution wise.

The system further has a number of climate sensors 32, 40 for sensing a climate-related quantity. The system further has first wireless communication devices 36, 42 to which the number of climate sensors 32, 40 are communicatively coupled. The first wireless communication devices 36, 42 are arranged for wirelessly transmitting climate-related quantity values sensed by the number of climate sensors 32, 40 towards a remote supervising functionality 70 connected to a communication network 80.

According to a first embodiment, the number of climate sensors 32, 40 comprises first climate sensors 32 that are arranged at or at least connected to any of the inner-climate influencing appliances 30. Then the first wireless communication devices that the first climate sensors 32 are communicatively coupled to are the same communication device as the communication device 36 of the inner-climate influencing appliance 30, through which the inner-climate influencing appliance receives its control instructions (see further below).

According to a second embodiment, which may be combined with the just mentioned first embodiment, the number of climate sensors 32, 40 comprises second climate sensors 40 that are independent from, i.e. separate from the inner-climate influencing appliances 30. Such second climate sensors 40 have their own first wireless communication devices 42 through which the sensed climate-related quantity values are sent to the remote supervising functionality 70.

Further, the plurality of inner-climate influencing appliances 30 each has a controller 34 for controlling the distribution of energy in the at least part of the building in which the inner-climate influencing appliance 30 is to be arranged. In fig. 1, the controller 34 is marked as a valve but it may be any kind of controller for controlling or regulating the distribution of energy. The valves 34 of fig. 1 are marked as outside the appliances 30 but this is only for facilitating the reading of the figures. The controllers 34 would most probably be inside its respective inner-climate influencing appliance 30. The appliances 30 are of course supplied by power themselves in an ordinary manner from e.g. the electrical power grid or from a local power source.

The inner-climate influencing appliances 30 may have one or more of said first climate sensor 32 each, or alternatively no climate sensor. The climate-related quantities sensed by the first and the second climate sensors 32, 40 may be e.g. temperature, humidity, and/or atmospheric pressure, air particle size and quantity, etc. In the alternative that each inner-climate influencing appliance 30 is equipped with a first climate sensor 32, there will always be a sensor in a room where there is an appliance 30. Further, as each appliance 30 has a wireless communication device 36, the first climate sensors 32 do not need to have an own first wireless communication device for being able to communicate its sensed values. Therefore, the wireless communication device 36 takes the role of the first wireless communication device for the first climate sensors 32. The first climate sensors 32 are communicatively connected to the wireless communication device 36 of its appliance 30 either directly or via a control unit of the appliance 30.

The wireless communication device 36 of each appliance 30 and the wireless communication device 42 of the separate second climate sensors 40 may be any kind of device being able to communicate wirelessly with a wireless access network node of a public wireless communication network 80 and/or with a temporary local wireless access node 50 that is a part of the system and that is erected in the vicinity of the building (see more further down in this document). For this reason, the wireless communication device 36 of each appliance 30 has a receiver and an antenna, and in case the appliance has a first climate sensor 32, also a transmitter. Further, the wireless communication device 42 of each second climate sensors 40 has a transmitter and an antenna. The wireless communication device 36, 42 of each appliance 30 and second climate sensor 40 may be an Internet of Things (IoT) device. In case, the wireless communication devices 36, 42 are arranged to communicate directly with the supervising functionality 70 via the communication network 80 directly, the wireless communication devices 36, 42 may be realized as e.g. a GSM, 3G or Long Term Evolution (LTE)-enabled communication device. The wireless communication device 36 of each appliance is power supplied by its appliance 30.

The wireless communication device 36 of each of the inner-climate influencing appliances 30 is arranged for receiving distribution control instructions from the supervising functionality 70. The received distribution control instructions are instructions for energy distribution for individual of the plurality of inner-climate influencing appliances 30, and the controller 34 of each inner-climate influencing appliance 30 is arranged to control the distribution of energy in accordance with its received distribution control instructions. In other words, the distribution control instructions are per inner-climate influencing appliance 30, i.e. the instructions are individual for each of the inner-climate influencing appliances 30. Each wireless communication device 36 has a unique ID which is associated with the inner-climate influencing appliance 30 that the wireless communication device 36 belongs to. Each distribution control instruction has one or more such unique ID appended to it so that each instruction will be received at the correct wireless communication device 36. Further, each second climate sensor 40 may have such a unique ID that is appended to the reported climate-related quantity values so that the supervising functionality knows from which climate sensor the values originate. Further, the system may have logged the position in the building of at least some of the appliances 30 and the second climate sensors 40. By logging the positions, the supervising functionality can determine the distribution control instructions per appliance even better in order to optimize inner climate per room and/or the total energy consumption.

According to an embodiment, which also is shown in fig. 1, the system further comprises a temporary wireless access node 50 that is arranged for receiving the climate-related quantity values transmitted by the wireless communication devices 36, 42, for transmitting the climate-related quantity values to the supervising functionality 70, for receiving the distribution control instructions from the supervising functionality 70, and for wirelessly transmitting the distribution control instructions to the wireless communication devices 36 of the appliances 30. The signals between the wireless access node 50 and the supervising functionality 70 may be transmitted via wireline and/or wirelessly. The wireless access node 50 is temporary in that it is not a regular part of a public wireless communication network provided by a telecom operator. The wireless access node 50 may communicate using for example Long Range (LoRa) communication. The wireless access node 50 may function as a gateway in a LoRa Wide Area Network (WAN). The LoRa gateway links end nodes, e.g. the wireless communication devices 36 with a network in which the supervising functionality 70 is situated.

As mentioned above, in fig. 1 there is also a supervising functionality 70, which is arranged in or connected to a communication network 80. The supervising functionality 70 is arranged for controlling the inner climate in a building in or at which the energy centre 20 and the plurality of inner-climate influencing appliances 30 are to be positioned, by determining the distribution control instructions based on the received climate-related quantity values and by sending the determined distribution control instructions towards the wireless communication devices 36 of the appliances 30. As the supervising functionality 70 receives the climate-related quantity values from all the inner-climate influencing appliances 30 and second climate sensors 40 that sends values, the supervising functionality 70 will have access to all values and can determine distributions control instructions that benefit not just the single appliance 30 and the room where it is in but also the whole building 10 and the total energy consumption of the system. The supervising functionality 70 may be a part of the system or alternatively, the supervising functionality is separate from the system. For the latter, the system is prepared for communication with the supervising functionality and the supervising functionality is prepared for communication with the system. The supervising functionality 70 may be realized as a single network node, such as a server. Alternatively, the supervising functionality 70 is spread out over different physical, or virtual, nodes of the network. The latter may be called a "cloud-solution".

The second climate sensors 40, which are independent from the appliances 30 may be placed on e.g. a wall inside rooms of the building in which the system is to be used, or even outside the building (se reference sign 40 on the right side of the building 10 in fig. 1). By adding the system with such second and independent climate sensors 40 that send sensed climate-related quantity values to the supervising functionality 70, the supervising functionality could even better determine energy distribution control instructions and send those to the inner-climate influencing appliances in order to adapt the inner-climate in the rooms and throughout the rooms of the building.

As an example, a first of the second climate sensors 40 can be arranged for insertion into or at a material of a wall, floor, ceiling or roof of the building 10 in which the system is to be inserted. The climate-related quantity that the first of the second climate sensors 40 is arranged to sense comprises humidity in the material or at the surface of the material in which the first of the second climate sensors 40 is to be inserted. With such climate sensors, the inner-climate influencing appliances can be controlled more optimal for drying the material in the walls, floors, ceilings or roofs.

According to another embodiment, the system further comprises a detector arranged for detecting whether a door or window in the building in which the system is to be inserted is open or closed. Further, the detector is arranged for sending an indication towards the supervising functionality 70 when the sensed door or window is open longer than a certain time. Hereby the supervising functionality can react and e.g. trigger an alarm earlier than would be possible when the supervising functionality only would receive climate-related values from the number of climate sensors 32, 40. For example, if only the number of climate sensors are used, and they send temperature values, the supervising functionality 70 can react when the temperature drops significantly, but if the supervising functionality can react on e.g. a window or door being accidentally open, the supervising functionality 70 can react even before the temperature has dropped significantly. The detector can be in the shape of e.g. an electric circuit that is closed when the door or window is closed, and open when the door or window is open.

According to another embodiment, at least one of the inner-climate influencing appliances 30 are arranged for converting the energy received from the energy centre 20 to a suitable inner-climate energy type before distributing the energy in at least a part of the building 10 in which the inner-climate influencing appliances 30 are to be arranged. For example, incoming energy in the shape of electricity or water may be converted in the appliance to hot air before the energy is distributed.

According to yet another embodiment, the energy centre 20 has a wireless communication device 26 for receiving distribution control instructions originating from the supervising functionality 70 and a controller 24 for controlling distribution of energy towards the plurality of inner-climate influencing appliances 30 according to the distribution control instructions. Hereby, the supervising functionality 70 may control the distribution of energy from the energy centre 20 towards the inner-climate influencing appliances 30 in order to e.g. improve the energy efficiency of the whole system. In case the system is equipped with a temporary wireless access node 50, the wireless communication device 26 of the energy centre 20 may communicate with the supervising functionality 70 via the temporary wireless access node 50. However, the wireless communication device 26 may instead, or in addition have abilities to communicate with the supervising functionality via the communication network 80 directly, i.e. as e.g. a GSM, 3G or Long Term Evolution (LTE)-enabled communication device.

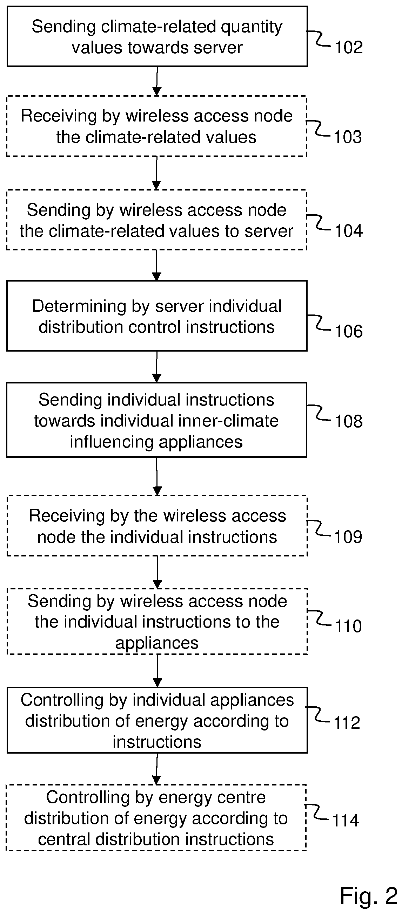

Fig. 2, in conjunction with fig. 1, describes a method for controlling temporary supply of energy to a building 10 using a system comprising a plurality of mobile inner-climate influencing appliances 30 to be distributed in the building 10, each inner-climate influencing appliance 30, being arranged for distributing energy in at least a part of the building 10 in which the inner-climate influencing appliance 30 is to be arranged. The system further comprises an energy centre 20 for supplying energy in the shape of fluid e.g. hot water, or electricity to the plurality of inner-climate influencing appliances 30. The inner-climate influencing appliances 30 are in energy communication with the energy centre 20 when the system is in use, so that energy distributed by the energy centre 20 is received at the plurality of inner-climate influencing appliances 30. Further, the system comprises a number of climate sensors 32, 40 for sensing a climate-related quantity, and the system is in communication connection with a supervising functionality 70 of a communication network 80. The method comprises sending 102, towards the supervising functionality 70, climate-related quantity values sensed by the number of climate sensors 32, 40 and determining 106, by the supervising functionality 70, based on the received climate-related quantity values, distribution control instructions for individual of the plurality of inner-climate influencing appliances 30. The method further comprises sending 108, towards the individual inner-climate influencing appliances 30, the determined individual distribution control instructions, and controlling 112, by the individual inner-climate influencing appliances 30, the distribution of energy in accordance with the received distribution control instruction.

According to an embodiment, the system further comprises a temporary wireless access node 50. Also, the method comprises receiving 103, by the wireless access node 50, the sent climate-related quantity values, sending 104, by the wireless access node 50, the received climate-related quantity values to the supervising functionality 70, receiving 109, by the wireless access node 50, the individual distribution control instructions sent by the supervising functionality 70, and sending 110, by the wireless access node 50, the received individual distribution control instructions to the individual inner-climate influencing appliances 30.

According to an embodiment, the determining 106 further comprises determining central distribution control instructions for the energy centre 20 based on the received climate-related quantity values, and the sending 108 further comprises sending the central distribution control instructions towards the energy centre 20. Further, the method comprises controlling 114, by the energy centre 20, distribution of energy towards the plurality of inner-climate influencing appliances 30 according to the central distribution control instructions.

## Claims

1. A system for temporary supply of energy to a building (10) at a construction site, that is when the building is under construction or is being renovated, the system comprising:
a plurality of mobile inner-climate influencing appliances (30) to be distributed in a building (10), each inner-climate influencing appliance (30) being arranged for distributing energy in at least a part of the building (10) in which the inner-climate influencing appliance (30) is to be arranged, the plurality of inner-climate influencing appliances being mobile meaning that they can be moved within the building, within a room of the building or to other rooms of the building,
**characterized in**
the inner-climate influencing appliances (30) being dehumidifiers, fan heaters used together with fans used as a complement to the fan heaters in order to aid in distributing the heated air or air cleaning devices, wherein the system further comprises:
a mobile energy centre (20) for supplying energy in the shape of fluid e.g. hot water, or electricity to the plurality of inner-climate influencing appliances (30), the energy centre being mobile meaning that it can be moved between different positions, floors and rooms of the building but also outside the building,
wherein the inner-climate influencing appliances (30) are in energy communication with the energy centre (20) when the system is in use, so that energy distributed by the energy centre (20) is received at the plurality of inner-climate influencing appliances (30), wherein
the system further comprises:
climate sensors (32, 40) for sensing a climate-related quantity, and
first wireless communication devices (36, 42) arranged for wirelessly transmitting climate-related quantity values sensed by the number of climate sensors (32, 40) towards a remote supervising functionality (70) connected to a communication network (80), the climate sensors (32, 40) being communicatively connected to the first wireless communication device (36, 42),
wherein the plurality of inner-climate influencing appliances (30) each has:
a wireless communication device (36) for receiving distribution control instructions from the supervising functionality (70), and
a controller (34) for controlling the distribution of energy in the at least part of the building in which the inner-climate influencing appliance (30) is to be arranged in accordance with the received distribution control instructions, and wherein the received distribution control instructions are instructions for energy distribution for individual of the plurality of inner-climate influencing appliances (30).

2. System according to claim 1, further comprising:
a temporary wireless access node (50) arranged for receiving the climate-related quantity values transmitted by the first wireless communication devices (36, 42), for transmitting the climate-related quantity values to the supervising functionality (70), for receiving the distribution control instructions from the supervising functionality (70), and for wirelessly transmitting the distribution control instructions to the wireless communication devices (36) of the respective inner-climate influencing appliances (30).

3. System according to claim 1 or 2, further comprising:
the supervising functionality (70), and the supervising functionality (70) being arranged for controlling inner climate in a building in or at which the energy centre (20) and the plurality of inner-climate influencing appliances (30) are to be positioned, by determining the distribution control instructions based on the received climate-related quantity values and by sending the determined distribution control instructions towards the wireless communication devices (36) of the respective inner-climate influencing appliances (30).

4. System according to any of the preceding claims, wherein the number of climate sensors (32, 40) comprises first climate sensors (32) that are arranged at or connected to any of the inner-climate influencing appliances (30), and wherein the first wireless communication devices (36, 42) are the wireless communication device (36) of the inner-climate influencing appliance (30) to which the first climate sensors (32) are connected.

5. System according to any of the preceding claims, wherein the number of climate sensors (32, 40) comprises second climate sensors (40) that are independent from the inner-climate influencing appliances (30).

6. System according to claim 5, wherein a first of the second climate sensors (40) is arranged for insertion into or arrangement at a material of a wall, floor, ceiling or roof of the building (10) in which the system is to be arranged, and the climate-related quantity that the first of the second climate sensors (40) is arranged to sense comprises humidity of the material of the wall, floor, ceiling or roof of the building (10).

7. System according to any of the preceding claims, further comprising a detector arranged for sensing whether a door or window in the building in which the system is to be inserted is open or closed, and for sending an indication towards the supervising functionality (70) when the sensed door or window is open longer than a certain time.

8. System according to any of the preceding claims, wherein at least one of the inner-climate influencing appliances (30) are arranged for converting the energy received from the energy centre (20) to a suitable inner-climate energy type before distributing the energy in at least a part of the building (10) in which the inner-climate influencing appliances (30) are to be arranged.

9. System according to any of the preceding claims, wherein the energy centre (20) has a wireless communication device (26) for receiving distribution control instructions originating from the supervising functionality (70) and a controller (24) for controlling distribution of energy towards the plurality of inner-climate influencing appliances (30) according to the distribution control instructions.

10. A method for controlling temporary supply of energy to a building (10) at a construction site, that is when the building is under construction or is being renovated using a system comprising a plurality of mobile inner-climate influencing appliances (30) to be distributed in the building (10), each inner-climate influencing appliance (30) being arranged for distributing energy in at least a part of the building (10) in which the inner-climate influencing appliance (30) is to be arranged, the plurality of inner-climate influencing appliances being mobile meaning that they can be moved within the building, within a room of the building or to other rooms of the building, **characterized in**
the inner-climate influencing appliances (30) being dehumidifiers, fan heaters used together with fans used as a complement to the fan heaters in order to aid in distributing the heated air or air cleaning devices, wherein the system further comprises
a mobile energy centre (20) for supplying energy in the shape of fluid e.g. hot water, or electricity to the plurality of inner-climate influencing appliances (30), the energy centre being mobile meaning that it can be moved between different positions, floors and rooms of the building but also outside the building, wherein the inner-climate influencing appliances (30) are in energy communication with the energy centre (20) when the system is in use, so that energy distributed by the energy centre (20) is received at the plurality of inner-climate influencing appliances (30), wherein
the system further comprises a number of climate sensors (32, 40) for sensing a climate-related quantity, and the system is in communication connection with a supervising functionality (70) of a communication network (80), the method comprising:
sending (102), towards the supervising functionality (70), climate-related quantity values sensed by the number of climate sensors (32, 40);
determining (106), by the supervising functionality (70), based on the received climate-related quantity values, distribution control instructions for individual of the plurality of inner-climate influencing appliances (30),
sending (108), towards the individual inner-climate influencing appliances (30), the determined individual distribution control instructions, and
controlling (112), by the individual inner-climate influencing appliances (30), the distribution of energy in accordance with the received distribution control instruction.

11. Method according to claim 10, wherein the system further comprises a temporary wireless access node (50), the method further comprising:
receiving (103), by the wireless access node (50), the sent climate-related quantity values;
sending (104), by the wireless access node (50), the received climate-related quantity values to the supervising functionality (70),
receiving (109), by the wireless access node (50), the individual distribution control instructions sent by the supervising functionality (70) and
sending (110), by the wireless access node (50), the received individual distribution control instructions to the individual inner-climate influencing appliances (30).

12. Method according to claim 10 or 11, wherein the determining (106) further comprises determining central distribution control instructions for the energy centre (20) based on the received climate-related quantity values, wherein the sending (108) further comprises sending the central distribution control instructions towards the energy centre (20), and the method further comprises:
controlling (114), by the energy centre (20), distribution of energy towards the plurality of inner-climate influencing appliances (30) according to the central distribution control instructions.

## Patentansprüche

1. System zur zeitweiligen Energieversorgung für ein Gebäude (10) an einer Baustelle, das heißt, wenn sich das Gebäude in Bau befindet oder renoviert wird, wobei das System umfasst:
eine Mehrzahl mobiler, das Innenklima beeinflussender Geräte (30) zur Verteilung in einem Gebäude (10), wobei jedes das Innenklima beeinflussende Gerät (30) zur Verteilung von Energie in mindestens einem Teil des Gebäudes (10), in dem das das Innenklima beeinflussende Gerät (30) eingerichtet werden soll, angeordnet ist, wobei die Mehrzahl der das Innenklima beeinflussender Geräte mobil ist, sodass sie innerhalb des Gebäudes, innerhalb eines Gebäuderaums oder in andere Räume des Gebäudes bewegt werden können,
**dadurch gekennzeichnet, dass**
die das Innenklima beeinflussenden Geräte (30) Entfeuchter sind, und zwar Heizlüfter, verwendet zusammen mit komplementär zu den Heizlüftern verwendeten Ventilatoren, um die Verteilung der erwärmten Luft oder Luftreinigungseinrichtungen zu unterstützen, wobei das System ferner umfasst:
ein mobiles Energiezentrum (20) zur Energieversorgung in Form von Fluid, z. B. Warmwasser, oder Elektrizität zu der Mehrzahl der das Innenklima beeinflussenden Geräte (30), wobei das Energiezentrum mobil ist, das heißt, dass es zwischen unterschiedlichen Positionen, Etagen und Räumen des Gebäudes, aber auch außerhalb des Gebäudes, bewegt werden kann, wobei die das Innenklima beeinflussenden Geräte (30) in Energiekommunikation mit dem Energiezentrum (20) sind, wenn das System verwendet wird, sodass von dem Energiezentrum (20) verteilte Energie an der Mehrzahl von das Innenklima beeinflussenden Geräten (30) empfangen wird, wobei
das System ferner umfasst:
Klimasensoren (32, 40) zum Erfassen einer klimabezogenen Menge und
erste drahtlose Kommunikationseinrichtungen (36, 42), eingerichtet zum drahtlosen Übertragen von durch die Anzahl von Klimasensoren (32, 40) erfassten klimabezogenen Mengenwerten zu einer entfernten Überwachungsfunktionalität (70), verbunden mit einem Kommunikationsnetzwerk (80), wobei die Klimasensoren (32, 40) mit der ersten drahtlosen Kommunikationseinrichtung (36, 42) kommunikativ verbunden sind, wobei die Mehrzahl von das Innenklima beeinflussenden Geräten (30) jeweils aufweist:
eine drahtlose Kommunikationseinrichtung (36) zum Empfangen von Verteilungssteueranweisungen von der Überwachungsfunktionalität (70), und
einen Controller (34) zum Steuern der Energieverteilung in dem mindestens einen Teil des Gebäudes, in dem das das Innenklima beeinflussende Gerät (30) entsprechend den empfangenen Verteilungssteueranweisungen eingerichtet werden soll und wobei die empfangenen Verteilungssteueranweisungen Anweisungen zur Energieverteilung für einzelne der Mehrzahl von das Innenklima beeinflussenden Geräten (30) sind.

2. System nach Anspruch 1, ferner umfassend:
einen zeitweiligen drahtlosen Zugangsknoten (50), eingerichtet zum Empfangen der von den ersten drahtlosen Kommunikationseinrichtungen (36, 42) übertragenen klimabezogenen Mengenwerte zum Übertragen der klimabezogenen Mengenwerte zu der Überwachungsfunktionalität (70) zum Empfangen der Verteilungssteueranweisungen von der Überwachungsfunktionalität (70) und zum drahtlosen Übertragen der Verteilungssteueranweisungen zu den drahtlosen Kommunikationseinrichtungen (36) der dazugehörigen das Innenklima beeinflussenden Geräte (30) .

3. System nach Anspruch 1 oder 2, ferner umfassend
die Überwachungsfunktionalität (70), wobei die Überwachungsfunktionalität (70) eingerichtet ist zum Steuern des Innenklimas in einem Gebäude, in oder an dem das Energiezentrum (20) und die Mehrzahl von das Innenklima beeinflussenden Geräten (30) positioniert werden sollen, indem die klimabezogenen Mengen basierend auf den empfangenen klimabezogenen Mengenwerten ermittelt und die ermittelten Verteilungssteueranweisungen zu den drahtlosen Kommunikationseinrichtungen (36) der dazugehörigen das Innenklima beeinflussenden Geräte (30) gesendet werden.

4. System nach einem der vorstehenden Ansprüche, wobei die Anzahl von Klimasensoren (32, 40) erste Klimasensoren (32) umfasst, die an beliebigen der das Innenklima beeinflussenden Geräte (30) eingerichtet oder damit verbunden sind, und wobei die ersten drahtlosen Kommunikationseinrichtungen (36, 42) die drahtlose Kommunikationseinrichtung (36) des das Innenklima beeinflussenden Geräts (30) ist, mit dem die ersten Klimasensoren (32) verbunden sind.

5. System nach einem der vorstehenden Ansprüche, wobei die Anzahl von Klimasensoren (32, 40) zweite Klimasensoren (40) umfasst, die von den das Innenklima beeinflussenden Geräten (30) unabhängig sind.

6. System nach Anspruch 5, wobei ein erster der zweiten Klimasensoren (40) zum Einsetzen in oder zur Anordnung an einem Material einer Wand, eines Bodens, einer Decke oder eines Daches des Gebäudes (10), in dem das System eingerichtet werden soll, angeordnet ist und wobei die klimabezogene Menge, zu deren Erfassen der erste der zweiten Klimasensoren (40) eingerichtet ist, Feuchtigkeit des Materials der Wand, des Bodens, der Decke oder des Dachs des Gebäudes (10) umfasst.

7. System nach einem der vorstehenden Ansprüche, ferner umfassend einen Detektor, eingerichtet zum Erfassen, ob eine Tür oder ein Fenster in dem Gebäude, in dem das System eingesetzt werden soll, geöffnet oder geschlossen ist, und zum Senden einer Angabe zu der Überwachungsfunktionalität (70), wenn die erfasste Tür oder das Fenster länger als über einen bestimmten Zeitraum geöffnet ist.

8. System nach einem der vorstehenden Ansprüche, wobei mindestens eines der das Innenklima beeinflussenden Geräte (30) eingerichtet ist zum Umwandeln der von dem Energiezentrum (20) empfangenen Energie in einen geeigneten Innenklima-Energietyp, bevor die Energie in mindestens einem Teil des Gebäudes (10), in dem die das Innenklima beeinflussenden Geräte (30) eingerichtet werden sollen, verteilt wird.

9. System nach einem der vorstehenden Ansprüche, wobei das Energiezentrum (20) eine drahtlose Kommunikationseinrichtung (26) zum Empfangen von Verteilungssteueranweisungen aufweist, die von der Überwachungsfunktionalität (70) ausgehen, sowie einen Controller (24) zum Steuern der Verteilung von Energie zu der Mehrzahl von das Innenklima beeinflussenden Geräten (30) entsprechend den Verteilungssteueranweisungen.

10. Verfahren zum Steuern zeitweiliger Energieversorgung für ein Gebäude (10) an einer Baustelle, das heißt, wenn sich das Gebäude in Bau befindet oder renoviert wird, unter Verwendung eines Systems, umfassend eine Mehrzahl mobiler, das Innenklima beeinflussender Geräte (30) zur Verteilung in dem Gebäude (10), wobei jedes das Innenklima beeinflussende Gerät (30) zur Verteilung von Energie in mindestens einem Teil des Gebäudes (10), in dem das das Innenklima beeinflussende Gerät (30) eingerichtet werden soll, angeordnet ist, wobei die Mehrzahl der das Innenklima beeinflussenden Geräte mobil ist, sodass sie innerhalb des Gebäudes, innerhalb eines Gebäuderaums oder in andere Räume des Gebäudes bewegt werden können, **dadurch gekennzeichnet, dass**
die das Innenklima beeinflussenden Geräte (30) Entfeuchter sind, und zwar Heizlüfter, verwendet zusammen mit komplementär zu den Heizlüftern verwendeten Ventilatoren, um die Verteilung der erwärmten Luft oder Luftreinigungseinrichtungen zu unterstützen, wobei das System ferner umfasst:
ein mobiles Energiezentrum (20) zur Energieversorgung in Form von Fluid, z. B. Warmwasser, oder Elektrizität zu der Mehrzahl der das Innenklima beeinflussenden Geräte (30), wobei das Energiezentrum mobil ist, das heißt, dass es zwischen unterschiedlichen Positionen, Etagen und Räumen des Gebäudes, aber auch außerhalb des Gebäudes, bewegt werden kann, wobei die das Innenklima beeinflussenden Geräte (30) in Energiekommunikation mit dem Energiezentrum (20) sind, wenn das System verwendet wird, sodass von dem Energiezentrum (20) verteilte Energie an der Mehrzahl von das Innenklima beeinflussenden Geräten (30) empfangen wird, wobei das System ferner eine Anzahl von Klimasensoren (32, 40) zum Erfassen einer klimabezogenen Menge umfasst und das System mit einer Überwachungsfunktionalität (70) eines Kommunikationsnetzwerks (80) in Kommunikationsverbindung ist, wobei das Verfahren umfasst:
Senden (102) von durch die Anzahl von Klimasensoren (32, 40) erfassten klimabezogenen Mengenwerten zu der Überwachungsfunktionalität (70);
Ermitteln (106) von Verteilungssteueranweisungen für individuelle der Mehrzahl von das Innenklima beeinflussenden Geräten (30) durch die Überwachungsfunktionalität (70), basierend auf den empfangenen klimabezogenen Mengenwerten;
Senden (108) der ermittelten individuellen Verteilungssteueranweisungen zu den individuellen das Innenklima beeinflussenden Geräten (30); und
Steuern (112) der Energieverteilung entsprechend der empfangenen Verteilungssteueranweisung durch die individuellen das Innenklima beeinflussenden Geräte (30) .

11. Verfahren nach Anspruch 10, wobei das System ferner einen zeitweiligen drahtlosen Zugangsknoten (50) umfasst, wobei das Verfahren ferner umfasst:
Empfangen (103) der gesendeten klimabezogenen Mengenwerte durch den drahtlosen Zugangsknoten (50);
Senden (104) der empfangenen klimabezogenen Mengenwerte durch den drahtlosen Zugangsknoten (50) zu der Überwachungsfunktionalität (70);
Empfangen (109) der von der Überwachungsfunktionalität (70) gesendeten individuellen Verteilungssteueranweisungen durch den drahtlosen Zugangsknoten (50); und
Senden (110), der empfangenen individuellen Verteilungssteueranweisungen durch den drahtlosen Zugangsknoten (50) zu den individuellen das Innenklima beeinflussenden Geräten (30).

12. Verfahren nach Anspruch 10 oder 11, wobei das Ermitteln (106) ferner das Ermitteln zentraler Verteilungssteueranweisungen für das Energiezentrum (20) umfasst, basierend auf den empfangenen klimabezogenen Mengenwerten, wobei das Senden (108) ferner das Senden der zentralen Verteilungssteueranweisungen zu dem Energiezentrum (20) umfasst und das Verfahren ferner umfasst:
Steuern (114) der Energieverteilung zu der Mehrzahl von das Innenklima beeinflussenden Geräten (30) durch das Energiezentrum (20) entsprechend den zentralen Verteilungssteueranweisungen.

## Revendications

1. Système pour la fourniture temporaire d'énergie à un bâtiment (10) sur un site de construction, c'est-à-dire lorsque le bâtiment est en cours de construction ou de rénovation, le système comprenant :
une pluralité d'appareils mobiles influençant le climat intérieur (30) à distribuer dans un bâtiment (10), chaque appareil influençant le climat intérieur (30) étant disposé pour distribuer de l'énergie dans au moins une partie du bâtiment (10) dans laquelle l'appareil influençant le climat intérieur (30) doit être disposé, la pluralité d'appareils influençant le climat intérieur étant mobiles, ce qui signifie qu'ils peuvent être déplacés à l'intérieur du bâtiment, dans une pièce du bâtiment ou vers d'autres pièces du bâtiment,
**caractérisé en ce que** :
les appareils influençant le climat intérieur (30) sont des déshumidificateurs, des chauffages à ventilateur utilisés conjointement avec des ventilateurs utilisés en complément des chauffages à ventilateur afin d'aider à distribuer l'air chauffé ou des dispositifs de nettoyage de l'air, où le système comprend en outre :
un centre d'énergie mobile (20) pour fournir de l'énergie sous la forme d'un fluide, par exemple de l'eau chaude, ou de l'électricité à la pluralité d'appareils influençant le climat intérieur (30), le centre d'énergie étant mobile, ce qui signifie qu'il peut être déplacé entre différentes positions, différents étages et pièces du bâtiment, mais également à l'extérieur du bâtiment, où les appareils influençant le climat intérieur (30) sont en communication énergétique avec le centre d'énergie (20) lorsque le système est utilisé, de sorte que l'énergie distribuée par le centre d'énergie (20) est reçue par la pluralité d'appareils influençant le climat intérieur (30), où :
le système comprend en outre :
des capteurs climatiques (32, 40) pour détecter une quantité liée au climat, et
des premiers dispositifs de communication sans fil (36, 42) agencés pour transmettre sans fil des valeurs de quantités liées au climat détectées par la pluralité de capteurs climatiques (32, 40) vers une fonctionnalité de supervision à distance (70) connectée à un réseau de communication (80), les capteurs climatiques (32, 40) étant connectés de manière communicative au premier dispositif de communication sans fil (36, 42),
où la pluralité d'appareils influençant le climat intérieur (30) ont chacun :
un dispositif de communication sans fil (36) pour recevoir des instructions de commande de distribution de la part de la fonctionnalité de supervision (70), et
un contrôleur (34) pour commander la distribution d'énergie dans l'au moins une partie du bâtiment dans lequel l'appareil influençant le climat intérieur (30) doit être disposé conformément aux instructions de commande de distribution reçues, et où les instructions de commande de distribution reçues sont des instructions pour la distribution d'énergie pour un appareil individuel parmi la pluralité d'appareils influençant le climat intérieur (30).

2. Système selon la revendication 1, comprenant en outre :
un noeud d'accès sans fil temporaire (50) agencé pour recevoir les valeurs de quantité liées au climat transmises par les premiers dispositifs de communication sans fil (36, 42), pour transmettre les valeurs de quantité liées au climat à la fonctionnalité de supervision (70), pour recevoir les instructions de commande de distribution de la fonctionnalité de supervision (70), et pour transmettre sans fil les instructions de commande de distribution aux dispositifs de communication sans fil (36) des appareils respectifs influençant le climat intérieur (30).

3. Système selon la revendication 1 ou la revendication 2, comprenant en outre :
la fonctionnalité de supervision (70), la fonctionnalité de supervision (70) étant agencée pour commander le climat intérieur dans un bâtiment dans ou au niveau duquel le centre d'énergie (20) et la pluralité d'appareils influençant le climat intérieur (30) doivent être positionnés, en déterminant les instructions de commande de distribution sur la base des valeurs de quantité liées au climat reçues et en envoyant les instructions de commande de distribution déterminées vers les dispositifs de communication sans fil (36) des appareils influençant le climat intérieur (30) respectifs.

4. Système selon l'une quelconque des revendications précédentes, dans lequel la pluralité de capteurs climatiques (32, 40) comprend des premiers capteurs climatiques (32) qui sont disposés sur ou connectés à l'un quelconque des appareils influençant le climat intérieur (30), et où les premiers dispositifs de communication sans fil (36, 42) sont le dispositif de communication sans fil (36) de l'appareil influençant le climat intérieur (30) auquel les premiers capteurs climatiques (32) sont connectés.

5. Système selon l'une quelconque des revendications précédentes, dans lequel la pluralité de capteurs climatiques (32, 40) comprend des seconds capteurs climatiques (40) qui sont indépendants des appareils influençant le climat intérieur (30).

6. Système selon la revendication 5, dans lequel un premier capteur des seconds capteurs climatiques (40) est agencé pour être inséré dans ou disposé au niveau d'un matériau d'un mur, d'un plancher, d'un plafond ou d'un toit du bâtiment (10) dans lequel le système doit être disposé, et la quantité liée au climat que le premier capteur des seconds capteurs climatiques (40) est agencé pour détecter comprend l'humidité du matériau du mur, du plancher, du plafond ou du toit du bâtiment (10).

7. Système selon l'une quelconque des revendications précédentes, comprenant en outre un détecteur agencé pour détecter si une porte ou une fenêtre dans le bâtiment dans lequel le système doit être inséré est ouverte ou fermée, et pour envoyer une indication vers la fonctionnalité de supervision (70) lorsque la porte ou la fenêtre détectée est ouverte plus longtemps qu'un certain temps.

8. Système selon l'une quelconque des revendications précédentes, dans lequel au moins un des appareils influençant le climat intérieur (30) est agencé pour convertir l'énergie reçue du centre d'énergie (20) en un type d'énergie de climat intérieur approprié avant de distribuer l'énergie dans au moins une partie du bâtiment (10) dans lequel les appareils influençant le climat intérieur (30) doivent être agencés.

9. Système selon l'une quelconque des revendications précédentes, dans lequel la centrale d'énergie (20) comporte un dispositif de communication sans fil (26) pour recevoir des instructions de commande de distribution provenant de la fonctionnalité de supervision (70) et un contrôleur (24) pour commander la distribution d'énergie vers la pluralité d'appareils influençant le climat intérieur (30) conformément aux instructions de commande de distribution.

10. Procédé pour commander l'alimentation temporaire en énergie d'un bâtiment (10) sur un site de construction, c'est-à-dire lorsque le bâtiment est en cours de construction ou de rénovation, en utilisant un système comprenant une pluralité d'appareils mobiles influençant le climat intérieur (30) à distribuer dans le bâtiment (10), chaque appareil influençant le climat intérieur (30) étant agencé pour distribuer de l'énergie dans au moins une partie du bâtiment (10) dans laquelle l'appareil influençant le climat intérieur (30) doit être disposé, la pluralité d'appareils influençant le climat intérieur étant mobiles, ce qui signifie qu'ils peuvent être déplacés à l'intérieur du bâtiment, dans une pièce du bâtiment ou vers d'autres pièces du bâtiment,
le procédé étant **caractérisé en ce que** les appareils influençant le climat intérieur (30) sont des déshumidificateurs, des chauffages à ventilateur utilisés conjointement avec des ventilateurs utilisés en complément des chauffages à ventilateur afin d'aider à distribuer l'air chauffé ou des dispositifs de nettoyage de l'air, où le système comprend en outre :
un centre d'énergie mobile (20) pour fournir de l'énergie sous la forme d'un fluide, par exemple de l'eau chaude, ou de l'électricité à la pluralité d'appareils influençant le climat intérieur (30), le centre d'énergie étant mobile, ce qui signifie qu'il peut être déplacé entre différentes positions, différents étages et pièces du bâtiment, mais également à l'extérieur du bâtiment, où les appareils influençant le climat intérieur (30) sont en communication énergétique avec le centre d'énergie (20) lorsque le système est utilisé, de sorte que l'énergie distribuée par le centre d'énergie (20) est reçue par la pluralité d'appareils influençant le climat intérieur (30), où le système comprend en outre un certain nombre de capteurs climatiques (32, 40) pour détecter une quantité liée au climat, et le système est en connexion de communication avec une fonctionnalité de supervision (70) d'un réseau de communication (80), le procédé comprenant les étapes suivantes :
envoyer (102), vers la fonctionnalité de supervision (70), des valeurs de quantités liées au climat détectées par la pluralité de capteurs climatiques (32, 40) ; déterminer (106), par la fonctionnalité de supervision (70), sur la base des valeurs de quantité liées au climat reçues, des instructions de commande de distribution pour un appareil individuel parmi la pluralité d'appareils influençant le climat intérieur (30),
envoyer (108), vers les appareils individuels influençant le climat intérieur (30), les instructions individuelles déterminées de commande de distribution, et
commander (112), par les appareils individuels influençant le climat intérieur (30), la distribution d'énergie conformément à l'instruction de commande de distribution reçue.

11. Procédé selon la revendication 10, dans lequel le système comprend en outre un noeud d'accès sans fil temporaire (50), le procédé comprenant en outre les étapes suivantes :
recevoir (103), par le noeud d'accès sans fil (50), les valeurs de quantité liées au climat qui ont été envoyées ;
envoyer (104), à la fonctionnalité de supervision (70), par le noeud d'accès sans fil (50), les valeurs de quantité liées au climat qui ont été reçues,
recevoir (109), par le noeud d'accès sans fil (50), les instructions individuelles de commande de distribution envoyées par la fonctionnalité de supervision (70), et
envoyer (110), aux appareils individuels influençant le climat intérieur (30), par le noeud d'accès sans fil (50), les instructions individuelles de commande de distribution reçues.

12. Procédé selon la revendication 10 ou la revendication 11, dans lequel la détermination (106) comprend en outre de déterminer des instructions de commande de distribution centrale pour le centre d'énergie (20) sur la base des valeurs de quantité liées au climat reçues, où l'envoi (108) comprend en outre l'envoi des instructions de commande de distribution centrale vers le centre d'énergie (20), et le procédé comprend en outre l'étape suivante :
commander (114), par le centre d'énergie (20), la distribution d'énergie vers la pluralité d'appareils influençant le climat intérieur (30) conformément aux instructions de commande de distribution centrale.
